(19) Europäisches Patentamt
European Patent Office
Office européen des brevets

(11) **EP 4 567 580 A1**

(12) **EUROPEAN PATENT APPLICATION**

(43) Date of publication:
**11.06.2025 Bulletin 2025/24**

(21) Application number: **25168212.6**

(22) Date of filing: **03.04.2025**

(51) International Patent Classification (IPC):
***G06F 3/06*** (2006.01)    ***G06F 12/02*** (2006.01)

(52) Cooperative Patent Classification (CPC):
**G06F 12/0207; G06F 3/0604; G06F 3/064; G06F 3/0673; G06F 12/0223; G06F 12/023; G06F 2212/1016**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.04.2024 CN 202410405264**

(71) Applicant: **Beijing Horizon Information Technology Co., Ltd.**
**Beijing 100094 (CN)**

(72) Inventor: **LI, Tianli**
**Beijing, 100094 (CN)**

(74) Representative: **Dehns Germany Partnerschaft mbB**
**Theresienstraße 6-8**
**80333 München (DE)**

(54) **DATA ACCESS METHOD AND APPARATUS, STORAGE MEDIUM, AND ELECTRONIC DEVICE**

(57)    Disclosed are a data access method and apparatus, a storage medium, and an electronic device. The data access method includes: obtaining (210) data access configuration information; determining (220) a data size, data address constraint information, and a data grouping storage mode based on the data access configuration information; determining (230) a plurality of grouping identifiers based on the data size and the data grouping storage mode; and determining (240) a storage address for corresponding grouped data of each of the plurality of grouping identifiers based on the data address constraint information. In the embodiments of this disclosure, a data access circuit can support transferring of multidimensional data with various data sizes, having high flexibility and versatility, thereby being helpful in shortening a design cycle of a chip and saving development costs of the chip.

Obtain data access configuration information — 210

Determine a data size, data address constraint information, and a data grouping storage mode based on the data access configuration information — 220

Determine a plurality of grouping identifiers based on the data size and the data grouping storage mode — 230

Determine a storage address for corresponding grouped data of each of the plurality of grouping identifiers based on the data address constraint information — 240

FIG. 2

EP 4 567 580 A1

## Description

### FIELD OF THE INVENTION

This disclosure relates to the technical field of chips, and in particular, to a data access method and apparatus, a storage medium, and an electronic device.

### BACKGROUND OF THE INVENTION

Currently, chips are widely applied. In some scenarios, multidimensional data needs to be transferred inside the chip, and a data size of the multidimensional data that needs to be transferred may vary in different scenarios. How to support the transferring of the multidimensional data with various data sizes is an issue worthy of attention for a person skilled in the art.

### SUMMARY OF THE INVENTION

To resolve the foregoing technical problem, this disclosure provides a data access method and apparatus, a storage medium, and an electronic device, to support transferring of multidimensional data with various data sizes by using a data access circuit.

According to an aspect of an embodiment of this disclosure, a data access method is provided, including:

obtaining data access configuration information;
determining a data size, data address constraint information, and a data grouping storage mode based on the data access configuration information;
determining a plurality of grouping identifiers based on the data size and the data grouping storage mode; and
determining a storage address for corresponding grouped data of each of the plurality of grouping identifiers based on the data address constraint information.

According to another aspect of an embodiment of this disclosure, a data access apparatus is provided, including:

an obtaining module, configured to obtain data access configuration information;
a first determining module, configured to determine a data size, data address constraint information, and a data grouping storage mode based on the data access configuration information obtained by the obtaining module;
a second determining module, configured to determine a plurality of grouping identifiers based on the data size and the data grouping storage mode that are determined by the first determining module; and
a third determining module, configured to determine a storage address for corresponding grouped data of each of the plurality of grouping identifiers determined by the second determining module based on the data address constraint information determined by the first determining module.

According to still another aspect of an embodiment of this disclosure, a computer readable storage medium is provided. The storage medium stores a computer program, and the computer program is used for implementing the data access method described above.
According to a still yet another aspect of an embodiment of this disclosure, an electronic device is provided, where the electronic device includes:

a processor; and
a memory, configured to store processor-executable instructions, where
the processor is configured to read the executable instructions from the memory, and execute the instructions to implement the data access method described above.

According to a further aspect of an embodiment of this disclosure, a computer program product is provided. When instructions in the computer program product are executed by a processor, the data access method described above is implemented.
Based on the data access method and apparatus, the storage medium, the electronic device, and the computer program product that are provided in the foregoing embodiments of this disclosure, a data access circuit may determine the data size, the data address constraint information, and the data grouping storage mode based on the data access configuration information, and perform a grouping identifier determining operation and a storage address determining operation on this basis. In this way, the data access circuit can clarify a corresponding storage address for each of a plurality pieces of grouped data. Based on the determined storage address, required multidimensional data may be read from the memory or the to-be-stored multidimensional data may be written into the memory. Therefore, according to the embodiments of this disclosure, the multidimensional data can be effectively transferred by using the data access circuit. It should be noted that for different scenarios, the data access configuration information obtained by the data access circuit may be different, so as to be adapted to the data size of the multidimensional data that needs to be transferred. In this way, the data access circuit can support transferring of the multidimensional data with various data sizes, having high flexibility and versatility. In this case, there is no need to design data access circuits separately for various data sizes, thereby being helpful in shortening a design cycle of a chip and saving development costs of the chip.

### BRIEF DESCRIPTION OF THE DRAWINGS

FIG. 1 is a circuit architecture diagram of a data access circuit according to some exemplary embodiments of this disclosure,

FIG. 2 is a schematic flowchart of a data access method according to some exemplary embodiments of this disclosure;

FIG. 3 is a schematic diagram of multidimensional data according to some exemplary embodiments of this disclosure;

FIG. 4 is a schematic flowchart of a storage address determining method according to some exemplary embodiments of this disclosure;

FIG. 5 is a schematic flowchart of a first reference address determining method according to some exemplary embodiments of this disclosure;

FIG. 6 is a schematic flowchart of a storage address determining method according to some other exemplary embodiments of this disclosure;

FIG. 7 is a schematic flowchart of a data obtaining and processing method according to some exemplary embodiments of this disclosure;

FIG. 8 is a schematic flowchart of a grouped data reading method according to some exemplary embodiments of this disclosure;

FIG. 9 is a schematic flowchart of a data obtaining and processing method according to some other exemplary embodiments of this disclosure;

FIG. 10 is a schematic flowchart of a data writing method according to some exemplary embodiments of this disclosure;

FIG. 11 is a schematic flowchart of a data writing method according to some other exemplary embodiments of this disclosure;

FIG. 12 is a schematic diagram of an operation performed to achieve transferring of multidimensional data according to some exemplary embodiments of this disclosure;

FIG. 13 is a schematic diagram of a structure of a data access apparatus according to some exemplary embodiments of this disclosure;

FIG. 14 is a schematic diagram of a structure of a third determining module according to some exemplary embodiments of this disclosure;

FIG. 15 is a schematic diagram of a data obtaining and processing module according to some exemplary embodiments of this disclosure;

FIG. 16 is a schematic diagram of a data obtaining and processing module according to some other exemplary embodiments of this disclosure;

FIG. 17 is a schematic diagram of a data obtaining and writing module according to some exemplary embodiments of this disclosure; and

FIG. 18 is a schematic diagram of a structure of an electronic device according to some exemplary embodiments of this disclosure.

## DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

Application overview

Currently, chips are widely applied. For example, in the field of driving technologies, intelligent driving chips are widely applied.

In some scenarios, transferring of multidimensional data needs to be performed inside the chip. For example, in some scenarios, it is needed to read the multidimensional data from a memory inside the chip or write the multidimensional data into the memory inside the chip. The memory inside the chip may be an on-chip memory, which may include, for example, a static random access memory (SRAM). It should be noted that, a data size of the multidimensional data that needs to be transferred may vary in different scenarios.

How to support the transferring of the multidimensional data with various data sizes is an issue worthy of attention for a person skilled in the art.

Exemplary system

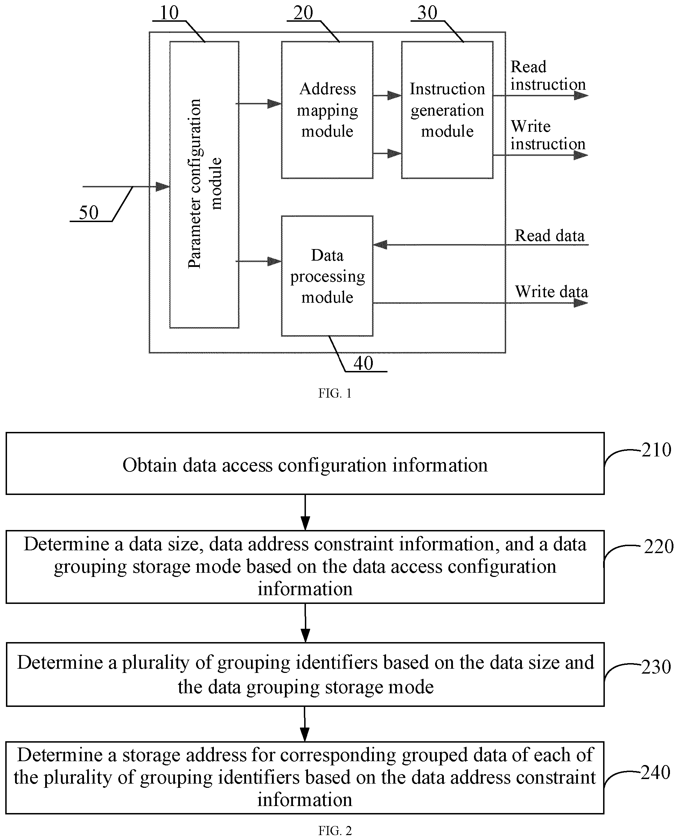

In embodiments of this disclosure, transferring of multidimensional data with various data sizes may be supported by using a data access circuit. For a circuit architecture of the data access circuit, reference may be made to FIG. 1, including a parameter configuration module 10, an address mapping module 20, an instruction generation module 30, and a data processing module 40.

The parameter configuration module 10 may obtain data access configuration information through a data bus 50. Optionally, the data bus 50 may include an advanced data bus (advanced peripheral bus, APB).

The address mapping module 20 may determine, based on the data access configuration information, a plurality of storage addresses for multidimensional data that needs to be read from a memory or needs to be written into the memory. Optionally, the memory may include a storage unit and an instruction processing unit. The storage unit may be configured to store data, and accordingly, the plurality of storage addresses determined based on the data access configuration information may be a plurality of storage addresses in the storage unit. The instruction processing unit may be configured to process instructions, for example, may be configured to process read instructions and write instructions.

The instruction generation module 30 may generate read instructions based on the plurality of storage addresses that are determined by the address mapping module 20 for the multidimensional data that needs to be read from the memory, and send the read instructions to the memory. The instruction processing unit in the memory may respond to the read instructions and obtain corresponding data from the storage unit in the memory. The data may be returned to the data access circuit. In this way, the data access circuit reads the multidimensional data from the memory.

The instruction generation module 30 may also generate write instructions based on the plurality of storage addresses that are determined by the address mapping module 20 for the multidimensional data that needs to be written into the memory, and send the generated write instructions to the memory. The instruction processing unit in the memory may respond to the write instructions and store corresponding data into the storage unit in the memory. In this way, the data access circuit writes the multidimensional data into the memory.

The data processing module 40 may obtain the data that is obtained through the read instructions, process the data, and generate processed data to be invoked by the write instructions.

For different scenarios, the data access configuration information obtained by the data access circuit may be different, so as to be adapted to the data size of the multidimensional data that needs to be transferred. In this way, the data access circuit can support transferring of the multidimensional data with various data sizes.

Exemplary method

FIG. 2 is a schematic flowchart of a data access method according to some exemplary embodiments of this disclosure. The method shown in FIG. 2 may be applied to a data access circuit. The method shown in FIG. 2 may include steps 210, 220, 230, and 240.

Step 210. Obtain data access configuration information.

Optionally, the data access configuration information may be obtained through a data bus 50 in FIG. 1.

It should be noted that the data access configuration information may refer to configuration information used to assist in transferring of multidimensional data. A working process of the data access circuit mainly involves two stages, which respectively are a first stage for reading the multidimensional data from the memory and a second stage for writing the multidimensional data into the memory. Correspondingly, the data access configuration information may include two parts, which respectively are first configuration information corresponding to the first stage and second configuration information corresponding to the second stage.

Optionally, the first configuration information may include but is not limited to a data size, data address constraint information, and a data grouping storage mode.

Optionally, the data size in the first configuration information may refer to a size of the multidimensional data that needs to be read from the memory at the first stage. The multidimensional data that needs to be read from the memory at the first stage may be tensor data, including but not limited to image data and feature map data. For ease of description, the tensor data may be referred to as first tensor data in the following. The data size in the first configuration information may include sizes corresponding to a plurality of data dimensions. The plurality of data dimensions may include but are not limited to a batch handling capacity dimension, a height dimension, a width dimension, and a channel dimension. The batch handling capacity dimension may also be referred to as a batch dimension or an N dimension. The size corresponding to the batch dimension may be represented by using n_size. The height dimension may also be referred to as a Height dimension or an H dimension. The size corresponding to the height dimension may be represented by using h_size. The width dimension may also be referred to as a Width dimension or a W dimension. The size corresponding to the width dimension may be represented by using w_size. The channel dimension may also be referred to as a Channel dimension or a C dimension. The size corresponding to the channel dimension may be represented by using c_size.

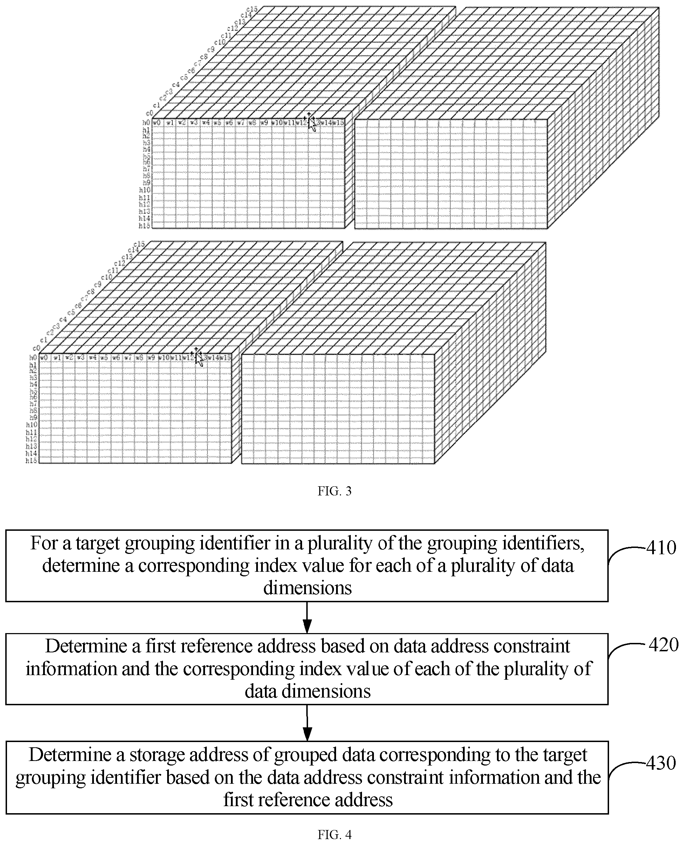

In an example, if the first tensor data may be as shown in FIG. 3, the data size in the first configuration information may be 4n16h16w16c, indicating that the size corresponding to the batch dimension is 4, the size corresponding to the height dimension is 16, the size corresponding to the width dimension is 16, and the size corresponding to the channel dimension is 16.

In another example, the data size in the first configuration information may be 3h19w19c, indicating that the size corresponding to the batch dimension is 1, the size corresponding to the height dimension is 3, the size corresponding to the width dimension is 19, and the size corresponding to the channel dimension is 19.

Optionally, the data address constraint information in the first configuration information may refer to information used to constrain a storage address of the first tensor data in the memory. The data address constraint information may include but is not limited to an initial address, an address offset, an address range, and a corresponding stride of each of the plurality of data dimensions. Strides corresponding to different data dimensions may be same or different.

In an example, the initial address may be 0, the address offset may be 100, and the address range may be [0, 1023]. This indicates that the first tensor data is stored starting from an address 0+100=100, and is stored within the address range of [0, 1023].

In another example, the strides corresponding to the batch dimension, the height dimension, the width dimension, and the channel dimension may all be 1.

In still another example, the strides corresponding to the batch dimension and the height dimension may both be 1, and the strides corresponding to the width dimension and the channel dimension may both be 2.

It should be noted that because a data size of the first tensor data is usually not too small, the first tensor data generally cannot be entirely stored at a single storage address in the memory. In view of this, the first tensor data may be split into a plurality of groups for storage, wherein each group includes a part of the first tensor data. Therefore, in the embodiments of this disclosure, the first configuration information may include the data grouping storage mode to indicate how to store the first tensor data in groups.

Optionally, the data grouping storage mode in the first configuration information may indicate sizes of a single group that correspond to the height dimension, the width dimension, and the channel dimension when storing the first tensor data in groups.

In an example, the data grouping storage mode may be 2h8w8c, indicating that when storing the first tensor data in groups, a size of a single group that corresponds to the height dimension is 2, a size corresponding to the width dimension is 8, and a size corresponding to the channel dimension is 8.

In another example, the data grouping storage mode may be 4w4h8c, indicating that when storing the first tensor data in groups, a size of a single group that corresponds to the height dimension is 4, a size corresponding to the width dimension is 4, and a size corresponding to the channel dimension is 8.

Composition of the first configuration information is described above. Similar to the first configuration information, the second configuration information may also include but is not limited to a data size, data address constraint information, and a data grouping storage mode. The data size in the second configuration information may refer to a size of the multidimensional data that needs to be written into the memory at the second stage. The multidimensional data that needs to be written into the memory at the second stage may be tensor data. For ease of description, this tensor data may be referred to as second tensor data in the following. The data address constraint information in the second configuration information may refer to information used to constrain a storage address of the second tensor data in the memory. The data grouping storage mode in the second configuration information may indicate sizes of a single group that correspond to the height dimension, the width dimension, and the channel dimension when storing the second tensor data in groups.

Step 220. Determine a data size, data address constraint information, and a data grouping storage mode based on the data access configuration information.

Optionally, for the first stage, the data size, the data address constraint information, and the data grouping storage mode may be obtained from the first configuration information.

Optionally, for the second stage, the data size, the data address constraint information, and the data grouping storage mode may be obtained from the second configuration information.

Step 230. Determine a plurality of grouping identifiers based on the data size and the data grouping storage mode.

It should be noted that if the first tensor data is split according to the data grouping storage mode obtained from the first configuration information, a plurality pieces of grouped data may be obtained, which may be in one-to-one correspondence to the plurality of grouping identifiers. On the contrary, to obtain a plurality pieces of grouped data, a plurality of grouping identifiers may be determined first. On this basis, in step 230, a plurality of grouping identifiers may be determined for the first stage based on the data size and the data grouping storage mode that are obtained from the first configuration information.

In an example, the data size of the first tensor data is 3h19w19c, and the data grouping storage mode is 2h8w8c. According to the data grouping storage mode of 2h8w8c, the first tensor data may be split into several pieces of grouped data. A first piece of grouped data is a part of the first tensor data that has an h-subscript of 0-1, a w-subscript of 0-7, and a c-subscript of 0-7. This part may also be represented by using h0-1, w0-7, and c0-7. A second piece of grouped data is a part of the first tensor data that has an h-subscript of 0-1, a w-subscript of 0-7, and a c-subscript of 8-15. This part may also be represented by using h0-1, w0-7, and c8-15. A third piece of grouped data is a part of the first tensor data that has an h-subscript of 0-1, a w-subscript of 0-7, and a c-subscript of 16-18. This part may also be represented by using h0-1, w0-7, and c16-18. A fourth piece of grouped data is a part of the first tensor data that has an h-subscript of 0-1, a w-subscript of 8-15, and a c-subscript of 0-7. This part may also be represented by using h0-1, w8-15, and c0-7. A fifth piece of grouped data is a part of the first tensor data that has an h-subscript of 0-1, a w-subscript of 8-15, and a c-subscript of 8-15. This part may also be represented by using h0-1, w8-15, and c8-15. A sixth piece of grouped data is a part of the first tensor data that has an h-subscript of 0-1, a w-subscript of 8-15, and a c-subscript of 16-18. This part may also be represented by using h0-1, w8-15, and c16-18. The others may be obtained by analogy, and details are not described herein. Herein, h0-1, w0-7, and c0-7 may be used as a grouping identifier corresponding to the first piece of grouped data; h0-1, w0-7, and c8-15 may be used as a grouping identifier corresponding to the second piece of grouped data, ...; and h0-1, w8-15, and c16-18 may be used as a grouping identifier corresponding to the sixth piece of grouped data.

Certainly, the grouping identifiers are not limited to the forms in the previous paragraph. For example, the grouping identifier may also be a group name or a group ID. In an example, h0-1, w0-7, and c0-7 may be converted into a group ID according to a certain rule, and the group ID obtained through conversion may be used as the grouping identifier corresponding to the first piece of grouped data.

The mode of determining a plurality of grouping identifiers for the first stage is specifically described above. By adopting a similar mode, a plurality of grouping identifiers may be determined for the second stage.

Step 240. Determine a storage address for corresponding grouped data of each of the plurality of grouping identifiers based on the data address constraint information.

As described above, a plurality of grouping identifiers may be determined for the first stage. The storage address may be determined for the corresponding grouped data of each of the plurality of grouping identifiers based on the data address constraint information obtained from the first configuration information. The storage address of the grouped data corresponding to any one of the grouping identifiers may refer to a physical address where the grouped data corresponding to that grouping identifier is stored in the memory. The corresponding grouped data of each of the plurality of grouping identifiers may be read from the memory based on the storage address of the corresponding grouped data of each of the plurality of grouping identifiers. This is equivalent to that the entire first tensor data is read from the memory.

As described above, a plurality of grouping identifiers may be determined for the second stage. The storage address may be determined for the corresponding grouped data of each of the plurality of grouping identifiers based on a data address constraint information obtained from the second configuration information. The storage address of the grouped data corresponding to any one of the grouping identifiers may refer to a physical address where the grouped data corresponding to that grouping identifier is to be stored in the memory. In this way, if existing in the data access circuit, the corresponding grouped data of each of the plurality of grouping identifiers may be written into the memory based on the storage address of the corresponding grouped data of each of the plurality of grouping identifiers. This is equivalent to writing the entire second tensor data into the memory.

In the embodiments of this disclosure, the data access circuit may determine the data size, the data address constraint information, and the data grouping storage mode based on the data access configuration information, and perform a grouping identifier determining operation and a storage address determining operation on this basis. In this way, the data access circuit can clarify a corresponding storage address for each of the plurality pieces of grouped data. Based on the determined storage address, the required multidimensional data may be read from the memory or the to-be-stored multidimensional data may be written into the memory. Therefore, according to the embodiments of this disclosure, the multidimensional data can be effectively transferred by using the data access circuit. It should be noted that for different scenarios, the data access configuration information obtained by the data access circuit may be different, so as to be adapted to the data size of the multidimensional data that needs to be transferred. In this way, the data access circuit can support transferring of the multidimensional data with various data sizes, having high flexibility and versatility. In this case, there is no need to design data access circuits separately for various data sizes, thereby being helpful in shortening a design cycle of a chip and saving development costs of the chip.

FIG. 4 is a schematic flowchart of a storage address determining method according to some exemplary embodiments of this disclosure. The method shown in FIG. 4 may include steps 410, 420, and 430. Optionally, a combination of steps 410 to 430 may be used as an optional implementation of step 240 in this disclosure. The embodiments shown in FIG. 4 may be applied to both the first stage and the second stage. For ease of understanding, description is made below by using an example in which the embodiments shown in FIG. 4 is applied to the first stage.

Step 410. For a target grouping identifier in the plurality of the grouping identifiers, determine a corresponding index value for each of a plurality of data dimensions.

Optionally, the target grouping identifier may be any one of the plurality of grouping identifiers that are determined at the first stage.

Optionally, index values corresponding to the batch dimension, the height dimension, the width dimension, and the channel dimension may be determined based on a distribution position of the grouped data corresponding to the target grouping identifier in the first tensor data.

It should be noted that during a working process of the data access circuit, each time reading a piece of grouped data, the data access circuit may process that piece of grouped data and obtain the processed grouped data to be invoked by write instructions. In this case, for the target grouping identifier, determining the corresponding index value for each of the plurality of data dimensions may refer to: determining, in the entire first tensor data, ranking values along the batch dimension, the height dimension, the width dimension, and the channel dimension for the grouped data corresponding to the target grouping identifier. Each determined ranking value may be used as the index value corresponding to the respective data dimension. Thus, there are a total of four index values.

In an example, as shown in FIG. 3, the data size of the first tensor data is 4n16h16w16c, and the data grouping storage mode is 2h8w8c. According to the group storage mode of 2h8w8c, the first tensor data may be split into 128 pieces of grouped data. It may be learned from FIG. 3 that, the first tensor data may include 4 pieces of sub-tensor data. Taking the sub-tensor data located in a lower left corner in FIG. 3 (which may be considered as a third piece of sub-tensor data) as an example, it may be split into 32 pieces of grouped data. Among these 32 pieces of grouped data, a first piece of grouped datamay be represented by using h0-1, w0-7, and c0-7; a second piece of grouped data may be represented by using h0-1, w0-7, and c8-15; a third piece of grouped data may be represented by using h0-1, w8-15, and c0-7; a fourth piece of grouped data may be represented by using h0-1, w8-15, and c8-15; a fifth piece of grouped data may be represented by using h2-3, w0-7, and c0-7; and a sixth piece of grouped data may be represented by using h2-3, w0-7, and c8-15. The others may be obtained by analogy, and details are not described herein. In the embodiments of this disclosure, it is assumed that the ranking values are determined according to a rule that an initial ranking value is 0, and the ranking values increase incrementally with an increment of 1. For the first piece of grouped data among these 32 pieces of grouped data, a ranking value thereof in the batch dimension may be 2, and ranking values thereof in the height dimension, the width dimension, and the channel dimension may all be 0. For the second piece of grouped data among these 32 pieces of grouped data, a ranking value thereof in the batch dimension may be 2, ranking values thereof in the height dimension and the width dimension may both be 0, and a ranking value thereof in the channel dimension may be 1. For the third piece of grouped data among these 32 pieces of grouped data, a ranking value thereof in the batch dimension may be 2, a ranking value thereof in the width dimension may be 1, and ranking values thereof in the height dimension and the channel dimension may be 0.

According to the mode described in the previous paragraph, a ranking value may be determined for each of the batch dimension, the height dimension, the width dimension, and the channel dimension. In this way, a total of four ranking values may be obtained, which is equivalent to that four index values are obtained. Therefore, the mode described in the previous paragraph may be considered as a four-layer index modeling mode.

In some embodiments, during the working process, the data access circuit may not process one piece of grouped data once it is read, but process several pieces of grouped data concurrently after the several pieces of grouped data are read. In this case, the four-layer index modeling mode described above is not applicable, but a seven-layer index modeling mode may be adopted. Correspondingly, for the target grouping identifier, determining the corresponding index value for each of the plurality of data dimensions may refer to: determining, in the entire first tensor data, ranking values along the batch dimension, the height dimension, the width dimension, and the channel dimension for a target data block to which the grouped data corresponding to the target grouping identifier belongs (the grouped data in the target data block needs to be processed concurrently); and determining, in the target data block, ranking values along the batch dimension, the height dimension, the width dimension, and the channel dimension for the grouped data corresponding to the target grouping identifier. Each determined ranking value may be used as the index value corresponding to the respective data dimension. In this way, there may be one index value corresponding to the batch dimension, and there may be two index values corresponding to each of the height dimension, the width dimension, and the channel dimension. Therefore, there may be a total of seven index values.

In an example, still referring to FIG. 3, assuming that a size of the target data block is 2h8w16c, the target data block may include the grouped data represented by using h0-1, w0-7, and c0-7 in the sub-tensor data located in the lower left corner in FIG. 3, and the grouped data represented by using h0-1, w0-7, and c8-15 in the sub-tensor data located in the lower left corner in FIG. 3. Regarding the grouped data represented by using h0-1, w0-7, and c0-7 in the sub-tensor data located in the lower left corner in FIG. 3, index values along the batch dimension, the height dimension, the width dimension, and the channel dimension of the target data block where that grouped data is located in the first tensor data are 2, 0, 0, and 0; and index values along the height dimension, the width dimension, and the channel dimension of that grouped data in the target data block are 0, 0, and 0. Regarding the grouped data represented by using h0-1, w0-7, and c8-15 in the sub-tensor data located in the lower left corner in FIG. 3, index values along the batch dimension, the height dimension, the width dimension, and the channel dimension of the target data block where that grouped data is located are 2, 0, 0, and 0; and index values along the height dimension, the width dimension, and the channel dimension of that grouped data in the target data block are 0, 0, and 1.

It should be noted that, the index values along the batch dimension, the height dimension, the width dimension, and the channel dimension of the target data block in the first tensor data may be considered as outer-layer index values; and the index values along the height dimension, the width dimension, and the channel dimension of the grouped data in the target data block may be considered as inner-layer index values. In the seven-layer index modeling mode, a combination of the outer-layer index values and the inner-layer index values may be used as a complete index value determined for the target grouping identifier.

Step 420. Determine a first reference address based on the data address constraint information and the corresponding index value of each of the plurality of data dimensions.

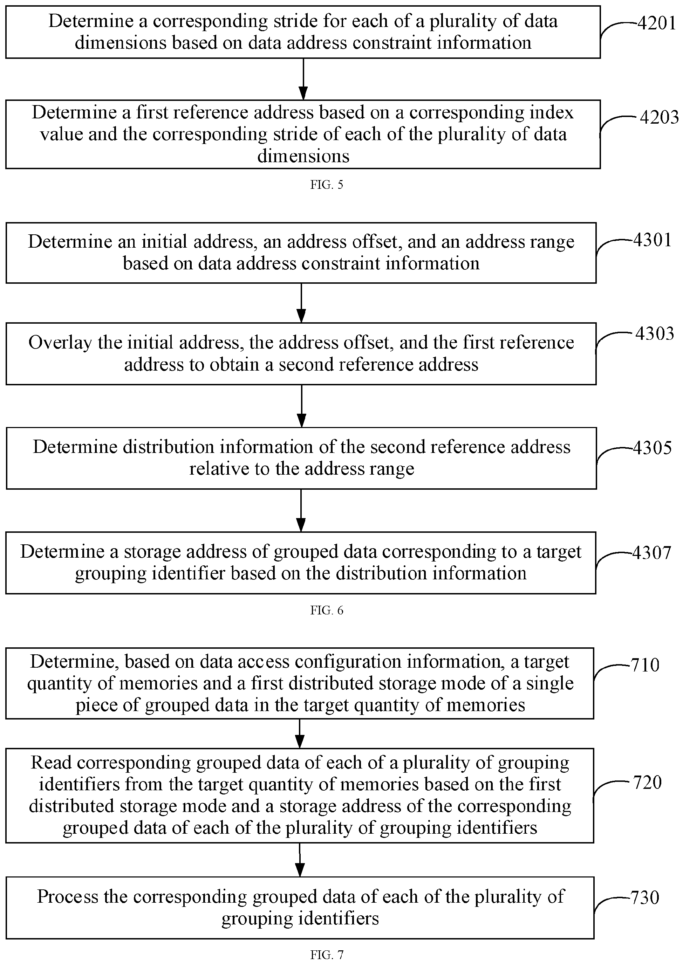

In some optional implementations of this disclosure, as shown in FIG. 5, step 420 may include steps 4201 and 4203.

Step 4201. Determine a corresponding stride for each of the plurality of data dimensions based on the data address constraint information.

Optionally, the data address constraint information may include the corresponding stride of each of the plurality of data dimensions. In this case, the corresponding stride of each of the plurality of data dimensions may be obtained from the data address constraint information.

Step 4203. Determine the first reference address based on the corresponding index value and the corresponding stride of each of the plurality of data dimensions.

Optionally, step 4203 may include:

> determining, based on the corresponding index value of each of the plurality of data dimensions, first ranking values respectively along the plurality of data dimensions for a target data block to which the grouped data corresponding to the target grouping identifier belongs, in tensor data with the data size (which may be specifically the first tensor data described above), where for any one of the data dimensions, the target data block refers to a data block in which all contained grouped data shares a same first ranking value;
>
> determining, based on the corresponding index value of each of the plurality of data dimensions, second ranking values respectively along a height dimension, a width dimension, and a channel dimension in the plurality of data dimensions for the grouped data corresponding to the target grouping identifier in the target data block;
>
> determining a sum of ranking values for each of the height dimension, the width dimension, and the channel dimension based on the corresponding first ranking value and the corresponding second ranking value;
>
> fusing, based on the corresponding stride of each of the plurality of data dimensions, the corresponding sum of ranking values of each of the height dimension, the width dimension, and the channel dimension, and the first ranking value corresponding to a batch dimension in the plurality of data dimensions, to obtain a fusion value; and
>
> determining the first reference address based on the fusion value.

Optionally, the index value corresponding to any one of the data dimensions may include a ranking value, in the first tensor data, along this data dimension of the target data block to which the grouped data corresponding to the target grouping identifier belongs. This ranking value may be used as the first ranking value corresponding to the data dimension.

Optionally, the index value corresponding to any one of the height dimension, the width dimension, and the channel dimension may include a ranking value, in the target data block, along this data dimension of the grouped data corresponding to the target grouping identifier. This ranking value may be used as the second ranking value corresponding to the data dimension.

It is assumed that first ranking values corresponding to the batch dimension, the height dimension, the width dimension, and the channel dimension are represented by using r, a1, b1, and c1, respectively; and second ranking values corresponding to the height dimension, the width dimension, and the channel dimension are represented by using a2, b2, and c2, respectively. For any one of the height dimension, the width dimension, and the channel dimension, the sum of ranking values may be determined based on the corresponding first ranking value and the corresponding second ranking value. In this way, the sum of ranking values corresponding to the height dimension may be represented by using a1+a2, the sum of ranking values corresponding to the width dimension may be represented by using b1+b2, and the sum of ranking values corresponding to the channel dimension may be represented by using c1+c2. If it is assumed that the strides corresponding to the batch dimension, the height dimension, the width dimension, and the channel dimension are s1, s2, s3, and s4, and the fusion value is represented by using K, K may be calculated according to the following formula:

$$K = r * s1 + (a1 + a2) * s2 + (b1 + b2) * s3 + (c1 + c2) * s4$$

Optionally, the fusion value may be determined as the first reference address.

In this way, in combination with the corresponding index value and the corresponding stride of each of the plurality of data dimensions, the first reference address may be efficiently and reliably determined through geometric calculations.

When the seven-layer modeling mode is used, an optional implementation of step 4203 is described above. If the four-layer modeling mode is used, step 4203 may include:

> determining, based on the corresponding index value of each of the plurality of data dimensions, third ranking values respectively along the plurality of data dimensions for the grouped data corresponding to the target grouping identifier in tensor data with the data size (which may be specifically the first tensor data described above),
>
> fusing the corresponding third ranking value of each of the plurality of data dimensions based on the corresponding stride of each of the plurality of data dimensions, to obtain a fusion value; and
>
> determining the first reference address based on the fusion value.

If it is assumed that the strides corresponding to the batch dimension, the height dimension, the width dimension, and the channel dimension are s1, s2, s3, and s4, the third ranking values corresponding to the plurality of data dimensions are represented by using r, a3, b3, and c3, and the fusion value is represented by using K, K may be calculated according to the following formula:

$$K = r * s1 + a3 * s2 + b3 * s3 + c3 * s4$$

In the implementation shown in FIG. 5, the data address constraint information may provide much effective reference for determining of the corresponding stride of each of the plurality of data dimensions. In combination with the corresponding index value and the corresponding stride of each of the plurality of data dimensions, the first reference address may be efficiently and reliably determined, thereby providing much effective reference for the determining of the storage address.

Step 430. Determine the storage address of the grouped data corresponding to the target grouping identifier based on the data address constraint information and the first reference address.

In some optional implementations of this disclosure, as shown in FIG. 6, step 430 may include steps 4301, 4303, 4305, and 4307.

Step 4301. Determine an initial address, an address offset, and an address range based on the data address constraint information.

Optionally, the data address constraint information may include the initial address, the address offset, and the address range. In this case, the initial address, the address offset, and the address range may be obtained from the data address constraint information.

Step 4303. Overlay the initial address, the address offset, and the first reference address to obtain a second reference address.

Optionally, the initial address, the address offset, and the first reference address may be added, and an obtained sum may be used as the second reference address.

Step 4305. Determine distribution information of the second reference address relative to the address range.

Optionally, the second reference address may be compared with the address range to determine the distribution information. The distribution information may be used to indicate whether the second reference address is within the address range.

Step 4307. Determine the storage address of the grouped data corresponding to the target grouping identifier based on the distribution information.

Optionally, step 4307 may include:
in response to that the distribution information is used to indicate that the second reference address is within the address range, determining the second reference address as the storage address of the grouped data corresponding to the target grouping identifier.

Alternatively, step 4307 may include:

in response to that the distribution information is used to indicate that the second reference address is located outside the address range, determining a target value that is used to indicate a range size of the address range;
determining a numerical relationship between the target value and a preset value;
in response to that the numerical relationship is used to indicate that the target value is an exponential power of the preset value, determining a remainder obtained by dividing the second reference address by the target value, and determining the storage address of the grouped data corresponding to the target grouping identifier based on the remainder; and
in response to that the numerical relationship is used to indicate that the target value is not an exponential power of the preset value, determining a difference between the second reference address and the target value, and determining the storage address of the grouped data corresponding to the target grouping identifier based on the difference.

Optionally, the address range may be represented by using [x1, x2]. The target value used to indicate the range size of the address range may be x2-x1+1. In an example, if x1 is 0 and x2 is 1023, the target value may be 1023-0+1=1024.

Optionally, the preset value may be 2. The numerical relationship between the target value and the preset value may be used to indicate whether the target value is an exponential power of the preset value.

When the numerical relationship is used to indicate that the target value is an exponential power of the preset value, the second reference address may be divided by the target value to obtain the remainder, and the storage address of the grouped data corresponding to the target grouping identifier may be determined based on the remainder. For example, a sum of the initial address and the address offset is referred to as a third reference address. If the remainder is located between the initial address and the third reference address, the remainder may be determined as the storage address of the grouped data corresponding to the target grouping identifier. If the remainder exceeds the third reference address, it may be determined that there is an error in the process of determining the storage address, and an error prompt may be output.

When the numerical relationship is used to indicate that the target value is not an exponential power of the preset value, the target value may be subtracted from the second reference address to obtain the difference, and the storage address of the grouped data corresponding to the target grouping identifier may be determined based on the difference. For example, if the difference is located between the initial address and the third reference address, the difference may be determined as the storage address of the grouped data corresponding to the target grouping identifier. If the difference exceeds the third reference address, it may be determined that there is an error in the process of determining the storage address, and an error prompt may be output.

In an example, if the initial address is 0, the address offset is 100, and the address range is [0, 1023], the target value is 1024. The second reference address is represented by using k. If k is within [0, 1023], k may be determined as the storage address of the grouped data corresponding to the target grouping identifier. If k is located outside [0, 1023], for example, is 10000, since 1024 is an exponential power of 2, 10000 may be divided by 1024 to obtain a remainder 784. If an address 784 is not occupied by other data, 784 may be determined as the storage address of the grouped data corresponding to the target grouping identifier.

In another example, if the initial address is 0, the address offset is 100, and the address range is [0, 1024], the target value is 1025. The second reference address is represented by using k. If k is within [0, 1025], k may be determined as the storage address of the grouped data corresponding to the target grouping identifier. If k is located outside [0, 1025], for example, is 10000, since 1025 is not an exponential power of 2, 1025 may be subtracted from 10000 to obtain a difference 8975. Since 8975 exceeds the address range of [0, 1024], an error prompt may be output.

In view of the above, for the case where the second reference address is located outside the address range, the manner of obtaining the remainder or the difference may be selected based on the numerical relationship between the target value and the preset value, so as to continue searching the storage address for the grouped data corresponding to the target grouping identifier. In this way, the storage address may be determined through a cyclic addressing scheme, so that the address range indicated by the data access configuration information can be utilized as possible for storing of the first tensor data.

Certainly, step 430 is not limited to the implementation shown in FIG. 6. For example, as described above, when the first reference address is determined based on the fusion value, the fusion value, the initial address, and the address offset may be overlaid, and an overlay result may be used as the first reference address. Correspondingly, in step 430, the address range may be determined based on the data address constraint information, and the storage address of the grouped data corresponding to the target grouping identifier may be determined based on distribution information of the first reference address relative to the address range. For another example, the cyclic addressing scheme may not be introduced, and an error prompt may be output as long as the second reference address is located outside the address range.

In the embodiments shown in FIG. 4, the corresponding index value of each of the plurality of data dimensions is determined for the target grouping identifier; and the first reference address is determined based on the data address constraint information and the corresponding index value of each of the plurality of data dimensions. The data address constraint information and the first reference address can provide much effective reference for the determining of the storage address of the grouped data corresponding to the target grouping identifier, thereby ensuring correctness and rationality of the finally determined storage address.

FIG. 7 is a schematic flowchart of a data obtaining and processing method according to some exemplary embodiments of this disclosure. The method shown in FIG. 7 may include steps 710, 720, and 730. Optionally, the method shown in FIG. 7 may be implemented after step 240 in this disclosure. The method shown in FIG. 7 may be applied to the first stage.

Step 710. Determine, based on the data access configuration information, a target quantity of memories and a first distributed storage mode of a single piece of the grouped data in the target quantity of memories.

Optionally, the data access configuration information may include the target quantity of the memories and the first distributed storage mode of a single piece of the grouped data in the target quantity of memories. In this case, the target quantity and the first distributed storage mode may be obtained from the data access configuration information.

Optionally, the target quantity may be one or more, such as four, six, or eight.

Optionally, the first distributed storage mode may refer to a specific mode in which a single piece of grouped data is stored in the target quantity of memories in a distributed manner. For example, the first distributed storage mode may be used to indicate distributed storage along a width direction or distributed storage along a channel direction.

In an example, there may be eight memories, and the first distributed storage mode may be used to indicate distributed storage along the width direction. In this case, for the grouped data with the grouping identifier of h0-1, w0-7, and c0-7 that is described above, data stored in a first memory may be represented by using h0-1, w0, and c0-7; data stored in a second memory may be represented by using h0-1, w1, and c0-7; data stored in a third memory may be represented by using h0-1, w2, and c0-7; ...; and data stored in an eighth memory may be represented by using h0-1, w7, and c0-7.

In another example, there may be eight memories, and the first distributed storage mode may be used to indicate distributed storage along the channel direction. In this case, for the grouped data with the grouping identifier of h0-1, w0-7, and c0-7 that is described above, data stored in a first memory may be represented by using h0-1, w0-7, and c0; data stored in a second memory may be represented by using h0-1, w0-7, and c1; data stored in a third memory may be represented by using h0-1, w0-7, and c2; ...; and data stored in an eighth memory may be represented by using h0-1, w0-7, and c7.

Step 720. Read the corresponding grouped data of each of the plurality of grouping identifiers from the target quantity of memories based on the first distributed storage mode and the storage address of the corresponding grouped data of each of the plurality of grouping identifiers.

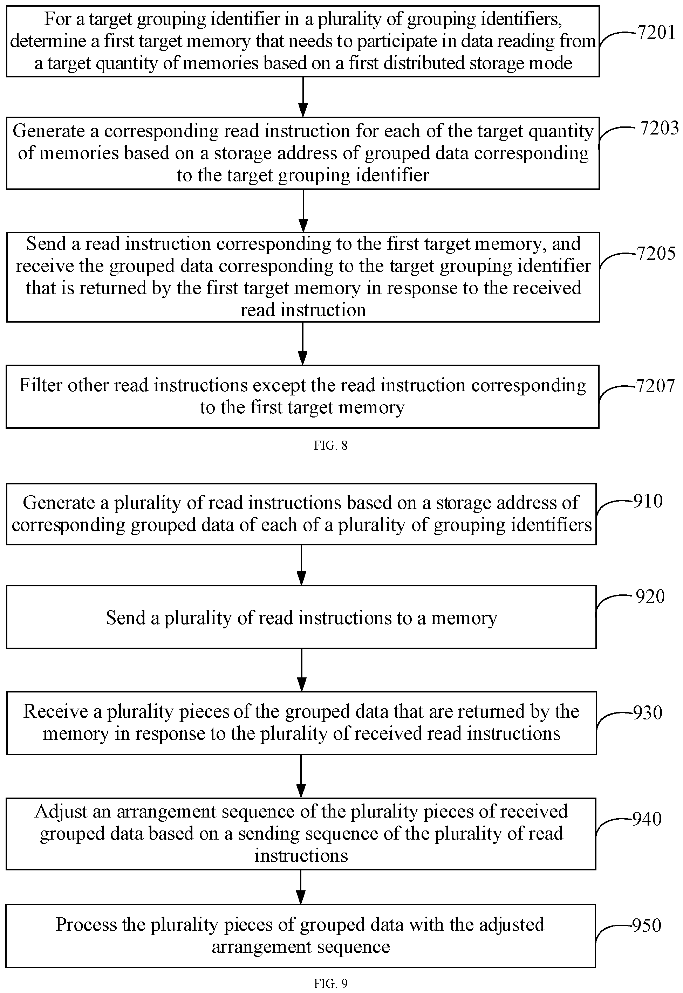

In some optional implementations of this disclosure, as shown in FIG. 8, step 720 may include steps 7201, 7203, 7205, and 7207.

Step 7201. For the target grouping identifier in the plurality of grouping identifiers, determine a first target memory that needs to participate in data reading from the target quantity of memories based on the first distributed storage mode.

In an example, h0-1, w0-7, and c16-18 described above is used as the target grouping identifier, there are eight memories, and the first distributed storage mode is used to indicate distributed storage along the channel direction. Regarding the target grouping identifier, data stored in a first memory may be represented by using h0-1, w0-7, and c16; data stored in a second memory may be represented by using h0-1, w0-7, and c17; and data stored in a third memory may be represented by using h0-1, w0-7, and c18. Obviously, all grouped data corresponding to the target grouping identifier may be stored by using the first to third memories, without using the remaining memories. In this case, the first target memory that needs to participate in data reading may merely include the first memory, the second memory, and the third memory.

In another example, h0-1, w16-18, and c0-7 is used as the target grouping identifier, there are eight memories, and the first distributed storage mode is used to indicate distributed storage along the width direction. Regarding the target grouping identifier, data stored in a first memory may be represented by using h0-1, w16, and c0-7; data stored in a second memory may be represented by using h0-1, w17, and c0-7; and data stored in a third memory may be represented by using h0-1, w18, and c0-7. Obviously, all grouped data corresponding to the target grouping identifier may be stored by using the first to third memories, without using the remaining memories. In this case, the first target memory that needs to participate in data reading may merely include the first memory, the second memory, and the third memory.

Step 7203. Generate a corresponding read instruction for each of the target quantity of memories based on the storage address of the grouped data corresponding to the target grouping identifier.

In an example, if the storage address of the grouped data corresponding to the target grouping identifier is a storage address A and there are eight memories, read instructions directing to the storage address A may be generated for the first to eighth memories.

Step 7205. Send the read instruction corresponding to the first target memory, and receive the grouped data corresponding to the target grouping identifier that is returned by the first target memory in response to the received read instruction.

Optionally, the data access circuit may be electrically connected to each memory. Through the corresponding electrical connection, the data access circuit may send the read instruction corresponding to the first target memory. The first target memory may receive the read instruction from the data access circuit. An instruction processing unit in the first target memory may obtain data indicated by the read instruction from a storage unit in the first target memory, where the data may be returned to the data access circuit. In this way, the data access circuit may obtain the grouped data corresponding to the target grouping identifier.

Step 7207. Filter other read instructions except the read instruction corresponding to the first target memory.

Optionally, all read instructions except the one corresponding to the first target memory may be discarded to achieve filtering of other read instructions.

In an example, h0-1, w0-7, and c16-18 described above is used as the target grouping identifier, and there are eight memories. Since the first target memory merely includes a first memory, a second memory, and a third memory, only the read instructions corresponding to the first memory, the second memory, and the third memory may be sent, while the read instructions corresponding to the fourth to eighth memories may be filtered out. In this way, in response to the read instruction corresponding to the first memory, the first memory may return the data that may be represented by using h0-1, w0-7, and c16 to the data access circuit; in response to the read instruction corresponding to the second memory, the second memory may return the data that may be represented by using h0-1, w0-7, and c17 to the data access circuit; and in response to the read instruction corresponding to the third memory, the third memory may return the data that may be represented by using h0-1, w0-7, and c18 to the data access circuit. Obviously, the data access circuit obtains all the grouped data corresponding to the target grouping identifier.

In the implementations shown in FIG. 8, the read instruction may be generated for each memory. However, referring to the first distributed storage mode, only the read instructions corresponding to the memories that actually store the required data may be sent out, while the remaining read instructions are filtered out. In other words, there is no need to send all the read instructions, thus being helpful in saving bandwidth and power consumption. Optionally, an operation of generating the remaining read instructions but not sending the same out may be referred to as an invalid read operation or a Fake read operation.

Certainly, the implementation of step 720 is not limited thereto. For example, the read instructions corresponding to the various memories may be sent out without performing the invalid read operation.

Step 730. Process the corresponding grouped data of each of the plurality of grouping identifiers.

Optionally, the corresponding grouped data of each of the plurality of grouping identifiers may be processed according to a preset processing rule. For example, once being read, one piece of grouped data is processed separately. Alternatively, after being read, several pieces of grouped data may be processed concurrently. In an example, after two pieces of grouped data are read, parts of the two pieces of grouped data may be exchanged.

In the embodiments shown in FIG. 7, a plurality of memories may be introduced to provide a larger storage space for storing the tensor data. Moreover, referring to the first distributed storage mode, data may be obtained from several memories to obtain the entire required grouped data, thus being helpful in ultimately reading the entire first tensor data.

FIG. 9 is a schematic flowchart of a data obtaining and processing method according to some exemplary embodiments of this disclosure. The method shown in FIG. 9 may include steps 910, 920, 930, 940, and 950. Optionally, the method shown in FIG. 9 may be implemented after step 240 in this disclosure. The method shown in FIG. 9 may be applied to the first stage.

Step 910. Generate a plurality of read instructions based on the storage address of the corresponding grouped data of each of the plurality of grouping identifiers.

In an example, if the storage address of the grouped data corresponding to any grouping identifier is a storage address B, read instructions directing to the storage address B may be generated.

Step 920. Send a plurality of read instructions to the memory.

Optionally, the data access circuit may be electrically connected to the memory. Through the electrical connection between the data access circuit and the memory, the data access circuit may send a plurality of read instructions to the memory.

Step 930. Receive a plurality pieces of the grouped data that are returned by the memory in response to the plurality of received read instructions.

Optionally, for each one in the plurality of received read instructions, the memory may return the corresponding data to the data access circuit, so that the data access circuit may obtain a plurality pieces of grouped data.

Step 940. Adjust an arrangement sequence of the plurality pieces of received grouped data based on a sending sequence of the plurality of read instructions.

In an example, the plurality of read instructions include a read instruction 1, a read instruction 2, and a read instruction 3, and a sending sequence of the read instruction 1, the read instruction 2, and the read instruction 3 is: the read instruction 1 is sent first, and then the read instruction 2 is sent, and finally the read instruction 3 is sent. When receiving the grouped data, if it is assumed that the grouped data corresponding to the read instruction 2 is received first, the grouped data corresponding to the read instruction 3 is then received, and finally the grouped data corresponding to the read instruction 1 is received, the sequence of the grouped data may be adjusted. To be specific, the grouped data corresponding to the read instruction 1 is ranked first, the grouped data corresponding to the read instruction 2 is ranked second, and the grouped data corresponding to the read instruction 3 is ranked third.

Step 950. Process the plurality pieces of grouped data with the adjusted arrangement sequence.

It should be noted that, for specific implementation of step 950, reference may be made to the relevant description in step 730, and details are not described herein again.

In the embodiments shown in FIG. 9, after receiving the plurality pieces of grouped data that are returned by the memory in response to the plurality of received read instructions, the arrangement sequence of the plurality pieces of received grouped data may be adjusted according to the sending sequence of the plurality of read instructions, and then the plurality pieces of grouped data with the adjusted arrangement sequence may be processed. In this way, through order-preserving processing of data, errors caused by a chaotic data sequence may be avoided.

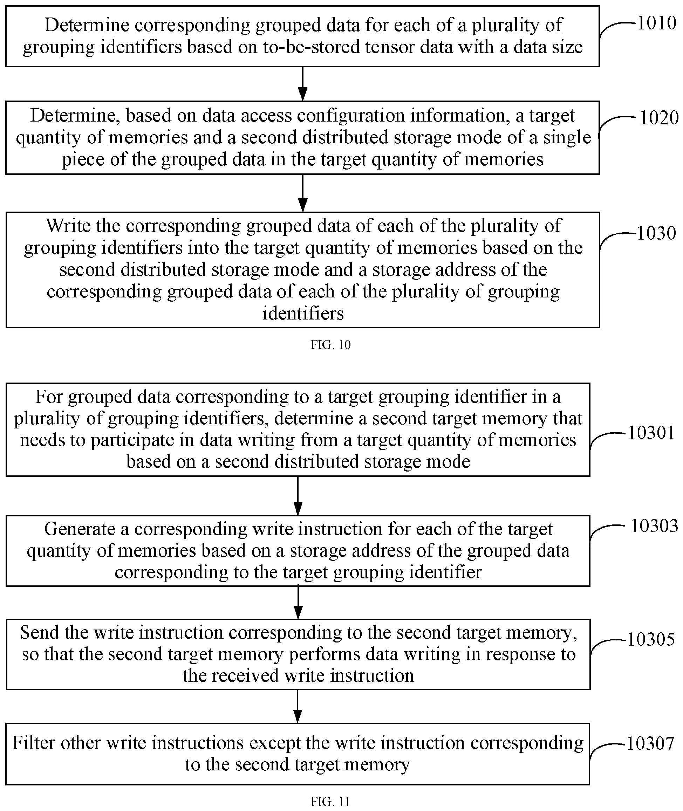

FIG. 10 is a schematic flowchart of a data writing method according to some exemplary embodiments of this disclosure. The method shown in FIG. 10 may include steps 1010, 1020, and 1030. Optionally, the method shown in FIG. 10 may be implemented after step 240 in this disclosure. The method shown in FIG. 10 may be applied to the second stage.

Step 1010. Determine the corresponding grouped data of each of the plurality of grouping identifiers based on to-be-stored tensor data with the data size.

Optionally, the second tensor data described above may be used as the to-be-stored tensor data with the data size. The to-be-stored tensor data may be a processing result obtained by processing the first tensor data that is read from the memory at the first stage.

Optionally, the to-be-stored tensor data may be split according to the data grouping storage mode in the second configuration information. In this way, a plurality pieces of grouped data may be obtained, which may include the corresponding grouped data of each of the plurality of grouping identifiers in step 1010.

Step 1020. Determine, based on the data access configuration information, a target quantity of memories and a second distributed storage mode of a single piece of the grouped data in the target quantity of memories.

It should be noted that, for specific implementation of step 1020, reference may be made to the relevant description in step 710, and details are not described herein again.

Step 1030. Write the corresponding grouped data of each of the plurality of grouping identifiers into the target quantity of memories based on the second distributed storage mode and the storage address of the corresponding grouped data of each of the plurality of grouping identifiers.

In some optional implementations of this disclosure, as shown in FIG. 11, step 1030 may include steps 10301, 10303, 10305, and 10307.

Step 10301. For the grouped data corresponding to the target grouping identifier in the plurality of grouping identifiers, determine a second target memory that needs to participate in data writing from the target quantity of memories based on the second distributed storage mode.

It should be noted that, for specific implementation of step 10301, reference may be made to the relevant description in step 7201, and details are not described herein again.

Step 10303. Generate a corresponding write instruction for each of the target quantity of memories based on the storage address of the grouped data corresponding to the target grouping identifier.

In an example, if the storage address of the grouped data corresponding to the target grouping identifier is a storage address C and there are eight memories, write instructions directing to the storage address C may be generated for the first to eighth memories.

Step 10305. Send the write instruction corresponding to the second target memory, so that the second target memory performs data writing in response to the received write instruction.

Optionally, after the write instruction corresponding to the second target memory is sent, the second target memory can receive the write instruction from the data access circuit. An instruction processing unit in the second target memory may respond to the write instructions and store corresponding data into a storage unit in the second target memory.

Step 10307. Filter other write instructions except the write instruction corresponding to the second target memory.

Optionally, other write instructions, except those corresponding to the second target memory, may be discarded to achieve filtering of other write instructions.

In an example, h0-1, w0-7, and c16-18 described above is used as the target grouping identifier, and there are eight memories. In this way, the second target memory may only include a first memory, a second memory, and a third memory. Thus, a write instruction used to indicate storage of the data that may be represented by using h0-1, w0-7, and c16 may be sent to the first memory, a write instruction used to indicate storage of the data that may be represented by using h0-1, w0-7, and c17 may be sent to the second memory, a write instruction used to indicate storage of the data that may be represented by using h0-1, w0-7, and c18 may be sent to the third memory, and the write instructions corresponding to the fourth to eighth memories are filtered out. In this way, in response to the write instruction corresponding to the first memory, the first memory may store the data represented by using h0-1, w0-7, and c16; in response to the write instruction corresponding to the second memory, the second memory may store the data represented by using h0-1, w0-7, and c17; and in response to the write instruction corresponding to the third memory, the third memory may store the data represented by using h0-1, w0-7, and c18. Obviously, the grouped data corresponding to the target grouping identifier is entirely written into the memory.

In the implementations shown in FIG. 11, the write instruction may be generated for each memory. However, referring to the second distributed storage mode, only the write instructions corresponding to the memories that are actually used to store the required data may be sent out, while other write instructions are filtered out. In other words, there is no need to send all the write instructions, thus being helpful in saving bandwidth and power consumption. Optionally, an operation of generating other write instructions but not sending the same out may be referred to as an invalid write operation or a Fake write operation.

Certainly, the implementation of step 1030 is not limited thereto. For example, the write instructions corresponding to the various memories may be sent out without performing the invalid write operation.

In the embodiments shown in FIG. 10, a plurality of memories may be introduced to provide a larger storage space for storing the tensor data. Moreover, referring to the second distributed storage mode, corresponding data may be written into each memory, thus being helpful in writing the entire second tensor data into the memory.

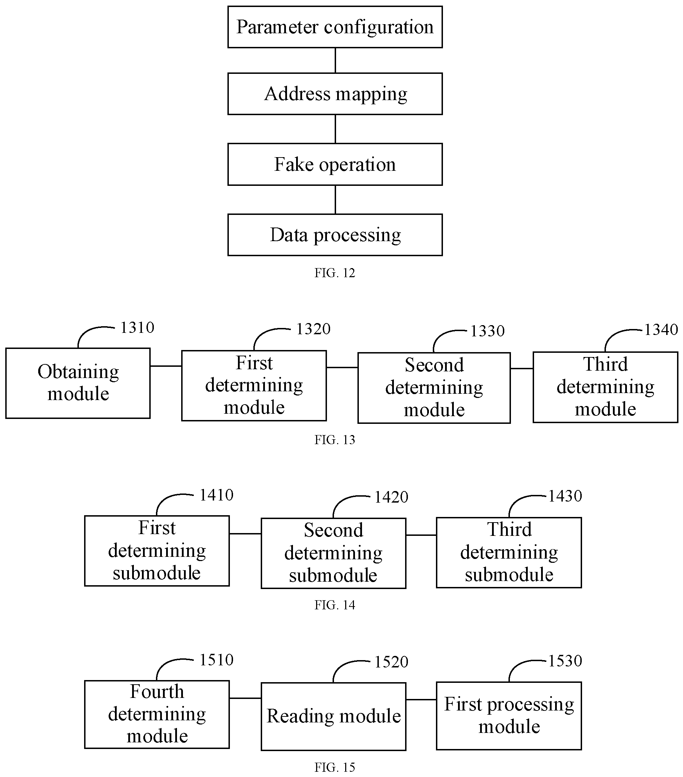

In some optional examples, as shown in FIG. 12, in the embodiments of this disclosure, to effectively implement the transferring of the multidimensional data, the following operations may be performed.

(1) Parameter configuration

The data access circuit may obtain the data access configuration information, which may include hardware parameter configuration and software parameter configuration. The hardware parameter configuration may include the target quantity of the memories. The software parameter configuration may include the data sizes, the data address constraint information, and the data grouping storage modes that correspond to the first stage and the second stage, respectively.

(2) Address mapping

The data access circuit may determine a plurality of grouping identifiers through the seven-layer modeling mode, and determine the storage addresses of the grouped data based on these grouping identifiers.

(3) Fake operation

For details, reference may be made to the read Fake operation and the write Fake operation described above. When using the read Fake operation and the write Fake operation, although read and write instructions are generated for all memories, only some of the read and write instructions are sent out, while the other read and write instructions may be recycled at a port of the data access circuit, without actually accessing the memory. Optionally, for the recycled read instructions, the port of the data access circuit may return invalid data and invalid data flags. For the recycled write instructions, the port of the data access circuit may return write responses.

(4) Data processing

Before data processing, order-preserving processing of data may be performed.

In view of the above, in the embodiments of this disclosure, the data access circuit can support transferring of the multidimensional data with various data sizes, having high flexibility and versatility, thereby helping shorten a design cycle of a chip and save development costs of the chip.

Exemplary apparatus

FIG. 13 is a schematic diagram of a structure of a data access apparatus according to some exemplary embodiments of this disclosure. The apparatus shown in FIG. 13 may include:

an obtaining module 1310, configured to obtain data access configuration information;
a first determining module 1320, configured to determine a data size, data address constraint information, and a data grouping storage mode based on the data access configuration information obtained by the obtaining module 1310;
a second determining module 1330, configured to determine a plurality of grouping identifiers based on the data size and the data grouping storage mode that are determined by the first determining module 1320; and
a third determining module 1340, configured to determine a storage address for corresponding grouped data of each of the plurality of grouping identifiers determined by the second determining module 1330 based on the data address constraint information determined by the first determining module 1320.
In some optional examples, as shown in FIG. 14, the third determining module 1340 includes:
a first determining submodule 1410, configured to determine a corresponding index value for each of a plurality of data dimensions for a target grouping identifier in the plurality of the grouping identifiers determined by the second determining module 1330;
a second determining submodule 1420, configured to determine a first reference address based on the data address constraint information determined by the first determining module 1320 and the corresponding index value of each of the plurality of data dimensions that is determined by the first determining submodule 1410; and
a third determining submodule 1430, configured to determine the storage address of the grouped data corresponding to the target grouping identifier based on the data address constraint information determined by the first determining module 1320 and the first reference address determined by the second determining submodule 1420.

In some optional examples, the second determining submodule 1420 includes:

a first determining unit, configured to determine a corresponding stride for each of the plurality of data dimensions based on the data address constraint information determined by the first determining module 1320; and
a second determining unit, configured to determine the first reference address based on the corresponding index value of each of the plurality of data dimensions that is determined by the first determining submodule 1410 and the corresponding stride of each of the plurality of data dimensions that is determined by the first determining unit.

In some optional examples, the third determining submodule 1430 includes:

a third determining unit, configured to determine an initial address, an address offset, and an address range based on the data address constraint information determined by the first determining module 1320;
an overlaying unit, configured to overlay the initial address and the address offset that are determined by the third determining unit and the first reference address determined by the second determining submodule 1420 to obtain a second reference address;
a fourth determining unit, configured to determine distribution information of the second reference address obtained by the overlaying unit relative to the address range determined by the first determining module 1320; and
a fifth determining unit, configured to determine the storage address of the grouped data corresponding to the target grouping identifier based on the distribution information determined by the fourth determining unit.
In some optional examples, the fifth determining unit includes:
a first determining subunit, configured to determine a target value that is used to indicate a range size of the address range in response to that the distribution information determined by the fourth determining unit is used to indicate that the second reference address obtained by the overlaying unit is located outside the address range determined by the first determining module 1320;

a second determining subunit, configured to determine a numerical relationship between the target value determined by the first determining subunit and a preset value;

a third determining subunit, configured to determine a remainder obtained by dividing the second reference address obtained by the overlaying unit by the target value determined by the first determining subunit in response to that the numerical relationship determined by the second determining subunit is used to indicate that the target value determined by the first determining subunit is an exponential power of the preset value, and determine the storage address of the grouped data corresponding to the target grouping identifier based on the remainder; and

a fourth determining subunit, configured to determine a difference between the second reference address obtained by the overlaying unit and the target value in response to that the numerical relationship determined by the second determining subunit is used to indicate that the target value determined by the first determining subunit is not an exponential power of the preset value, and determine the storage address of the grouped data corresponding to the target grouping identifier based on the difference.

In some optional examples, the second determining unit includes:

a fifth determining subunit, configured to determine, based on the corresponding index value of each of the plurality of data dimensions that is determined by the first determining submodule 1410, first ranking values respectively along the plurality of data dimensions for a target data block to which the grouped data corresponding to the target grouping identifier belongs in tensor data with the data size, where for any one of the data dimensions, the target data block refers to a data block in which all contained grouped data shares a same first ranking value;

a sixth determining subunit, configured to determine second ranking values respectively along a height dimension, a width dimension, and a channel dimension in the plurality of data dimensions for the grouped data corresponding to the target grouping identifier in the target data block based on the corresponding index value of each of the plurality of data dimensions that is determined by the first determining submodule 1410;

a seventh determining subunit, configured to determine a sum of ranking values for each of the height dimension, the width dimension, and the channel dimension based on the corresponding first ranking value determined by the fifth determining subunit and the corresponding second ranking value determined by the sixth determining subunit;

a fusion subunit, configured to fuse, based on the corresponding stride of each of the plurality of data dimensions that is determined by the first determining unit, the corresponding sum of ranking values of each of the height dimension, the width dimension, and the channel dimension that is determined by the seventh determining subunit, and the first ranking value corresponding to a batch dimension in the plurality of data dimensions that is determined by the fifth determining subunit, to obtain a fusion value; and

an eighth determining subunit, configured to determine the first reference address based on the fusion value obtained by the fusion subunit.

In some optional examples, as shown in FIG. 15, the apparatus provided in the embodiments of this disclosure may further include:

a fourth determining module 1510, configured to determine, based on the data access configuration information obtained by the obtaining module 1310, a target quantity of memories and a first distributed storage mode of a single piece of the grouped data in the target quantity of memories after the third determining module 1340 determines the storage address of the corresponding grouped data of each of the plurality of grouping identifiers based on the data address constraint information;

a reading module 1520, configured to read the corresponding grouped data of each of the plurality of grouping identifiers from the target quantity of memories based on the first distributed storage mode determined by the fourth determining module 1510 and the storage address of the corresponding grouped data of each of the plurality of grouping identifiers; and

a first processing module 1530, configured to process the corresponding grouped data of each of the plurality of grouping identifiers that is read by the reading module 1520.

In some optional examples, the reading module 1520 includes:

a fourth determining submodule, configured to determine, for the target grouping identifier in the plurality of grouping identifiers determined by the second determining module 1330, a first target memory that needs to participate in data reading from the target quantity of memories based on the first distributed storage mode determined by the fourth determining module 1510;

a first generation submodule, configured to generate a corresponding read instruction for each of the target quantity of memories based on the storage address of the grouped data corresponding to the target grouping identifier;

a transmission submodule, configured to send the read instruction corresponding to the first target memory determined by the fourth determining submodule, and receive the grouped data corresponding to the target grouping identifier that is returned by the first target memory determined by the fourth determining submodule in response to the received read instruction; and

a first filtering submodule, configured to filter other read instructions except the read instruction corresponding to the first target memory determined by the fourth determining submodule.

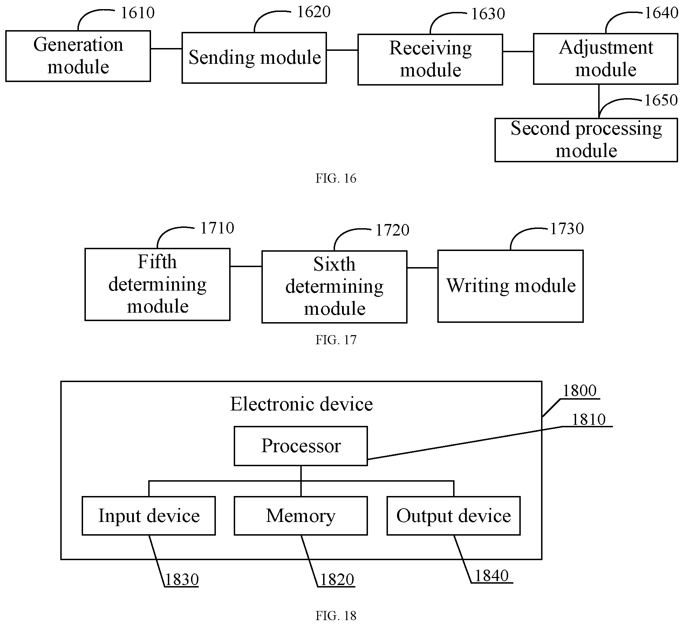

In some optional examples, as shown in FIG. 16, the apparatus provided in the embodiments of this disclosure may further include:

a generation module 1610, configured to generate a plurality of read instructions based on the storage address of the corresponding grouped data of each of the plurality of grouping identifiers after the third determining module 1340 determines the storage address of the corresponding grouped data of each of the plurality of grouping identifiers based on the data address constraint information;

a sending module 1620, configured to send a plurality of read instructions generated by the generation module 1610 to the memory;

a receiving module 1630, configured to receive a plurality pieces of the grouped data that are returned by the memory in response to the plurality of received read instructions;

an adjustment module 1640, configured to adjust an arrangement sequence of the plurality pieces of received grouped data based on a sending sequence of the plurality of read instructions generated by the generation module 1610; and

a second processing module 1650, configured to process the plurality pieces of grouped data with the arrangement sequence adjusted by the adjustment module 1640.

In some optional examples, as shown in FIG. 17, the apparatus provided in the embodiments of this disclosure may further include:

a fifth determining module 1710, configured to determine the corresponding grouped data of each of the plurality of grouping identifiers based on to-be-stored tensor data with the data size after the third determining module 1340 determines the storage address of the corresponding grouped data of each of the plurality of grouping identifiers based on the data address constraint information;

a sixth determining module 1720, configured to determine, based on the data access configuration information obtained by the obtaining module 1310, a target quantity of memories and a second distributed storage mode of a single piece of the grouped data in the target quantity of memories; and

a writing module 1730, configured to write the corresponding grouped data of each of the plurality of grouping identifiers that is determined by the fifth determining module 1710 into the target quantity of memories based on the second distributed storage mode determined by the sixth determining module 1720 and the storage address of the corresponding grouped data of each of the plurality of grouping identifiers.

In some optional examples, the writing module 1730 includes:

a fifth determining submodule, configured to determine, for the grouped data corresponding to the target grouping identifier in the plurality of grouping identifiers determined by the second determining module 1330, a second target memory that needs to participate in data writing from the target quantity of memories based on the second distributed storage mode determined by the sixth determining module 1720;

a second generation submodule, configured to generate a corresponding write instruction for each of the target quantity of memories based on the storage address of the grouped data corresponding to the target grouping identifier;

a sending submodule, configured to send the write instruction corresponding to the second target memory determined by the fifth determining submodule, so that the second target memory determined by the fifth determining submodule performs data writing in response to the received write instruction; and

a second filtering submodule, configured to filter other write instructions except the write instruction corresponding to the second target memory determined by the fifth determining submodule.

In the apparatus in this disclosure, various optional embodiments, optional implementations, and optional examples described above may be flexibly selected and combined according to requirements, so as to implement corresponding functions and effects. These are not enumerated in this disclosure.

For beneficial technical effects corresponding to the exemplary embodiments of this apparatus, reference may be made to the corresponding beneficial technical effects in the section of exemplary method described above, and details are not described herein again.

Exemplary electronic device

FIG. 18 is a block diagram of an electronic device according to an embodiment of this disclosure. An electronic device 1800 includes one or more processors 1810 and a memory 1820.

The processor 1810 may be a central processing unit (CPU) or another form of processing unit having a data processing capability and/or an instruction execution capability, and may control other components in the electronic device 1800 to implement desired functions.

The memory 1820 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 1810 may execute one or more of the program instructions to implement the method according to the various embodiments of this disclosure that are described above and/or other desired functions.

In an example, the electronic device 1800 may further include an input device 1830 and an output device 1840. These components are connected to each other through a bus system and/or another form of connection mechanism (not shown).

The input device 1830 may further include, for example, a keyboard and a mouse.

The output device 1840 may output various information to the outside, and may include, for example, a display, a speaker, a printer, a communication network, and a remote output device connected to the communication network.

Certainly, for simplicity, FIG. 18 shows only some of components in the electronic device 1800 that are related to this disclosure, and components such as a bus and an input/output interface are omitted. In addition, according to specific application situations, the electronic device 1800 may further include any other appropriate components.

Exemplary computer program product and computer readable storage medium

In addition to the foregoing method and device, embodiments of this disclosure may also relate to a computer program product, which includes computer program instructions. When the instructions are run by a processor, the processor is enabled to perform the steps, of the method according to the embodiments of this disclosure, that are described in the "Exemplary method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

**Claims**

1. A data access method, **characterized in that** the data access method comprises:

   obtaining (210) data access configuration information;
   determining (220) a data size, data address constraint information, and a data grouping storage mode based on the data access configuration information;
   determining (230) a plurality of grouping identifiers based on the data size and the data grouping storage mode; and
   determining (240) a storage address for corresponding grouped data of each of the plurality of grouping identifiers based on the data address constraint information.

2. The method according to claim 1, wherein the determining (240) a storage address for corresponding grouped data of each of the plurality of grouping identifiers based on the data address constraint information comprises:

   for a target grouping identifier in the plurality of the grouping identifiers, determining (410) a corresponding index value for each of a plurality of data dimensions;
   determining (420) a first reference address based on the data address constraint information and the corresponding index value of each of the plurality of data dimensions; and
   determining (430) the storage address of the grouped data corresponding to the target grouping identifier based on the data address constraint information and the first reference address.

3. The method according to claim 2, wherein the determining (420) a first reference address based on the data address constraint information and the corresponding index value of each of the plurality of data dimensions comprises:

   determining (4201) a corresponding stride for each of the plurality of data dimensions based on the data address constraint information; and
   determining (4203) the first reference address based on the corresponding index value and the corresponding stride of each of the plurality of data dimensions.

4. The method according to claim 2 or 3, wherein the determining (430) the storage address of the grouped data corresponding to the target grouping identifier based on the data address constraint information and the first reference address comprises:

   determining (4301) an initial address, an address offset, and an address range based on the data address constraint information;
   overlaying (4303) the initial address, the address offset, and the first reference address to obtain a second reference address;
   determining (4305) distribution information of the second reference address relative to the address range; and
   determining (4307) the storage address of the grouped data corresponding to the target grouping identifier based on the distribution information.

5. The method according to claim 4, wherein the determining (4307) the storage address of the grouped data corresponding to the target grouping identifier based on the distribution information comprises:

   in response to that the distribution information is used to indicate that the second reference address is located outside the address range, determining a target value that is used to indicate a range size of the address range;
   determining a numerical relationship between the target value and a preset value;
   in response to that the numerical relationship is used to indicate that the target value is an exponential power of the preset value, determining a remainder obtained by dividing the second reference address by the target value, and determining the storage address of the grouped data corresponding to the target grouping identifier based on the remainder; and
   in response to that the numerical relationship is used to indicate that the target value is not an exponential power of the preset value, determining a difference between the second reference address and the target value, and determining the storage address of the grouped data corresponding to the target grouping identifier based on the difference.

6. The method according to claim 3 or according to claim 4 or 5 when referring back to claim 3, wherein the determining (4203) the first reference address based on the corresponding index value and the corresponding stride of each of the plurality of data comprises:

   determining, based on the corresponding index value of each of the plurality of data dimensions, first ranking values respectively along the plurality of data dimensions for a target data block to which the grouped data corresponding to the target grouping identifier belongs, in tensor data with the data size, wherein for any one of the data dimensions, the target data block refers to a data block in which all contained grouped data shares a same first ranking value;

determining, based on the corresponding index value of each of the plurality of data dimensions, second ranking values respectively along a height dimension, a width dimension, and a channel dimension in the plurality of data dimensions for the grouped data corresponding to the target grouping identifier in the target data block;

determining a sum of ranking values for each of the height dimension, the width dimension, and the channel dimension based on the corresponding first ranking value and the corresponding second ranking value;

fusing, based on the corresponding stride of each of the plurality of data dimensions, the corresponding sum of ranking values of each of the height dimension, the width dimension, and the channel dimension, and the first ranking value corresponding to a batch dimension in the plurality of data dimensions, to obtain a fusion value; and

determining the first reference address based on the fusion value.

7. The method according to any one of claims 1 to 6, wherein after the determining (240) a storage address for corresponding grouped data of each of the plurality of grouping identifiers based on the data address constraint information, the method further comprises:

determining (710), based on the data access configuration information, a target quantity of memories and a first distributed storage mode of a single piece of the grouped data in the target quantity of memories;

reading (720) the corresponding grouped data of each of the plurality of grouping identifiers from the target quantity of memories based on the first distributed storage mode and the storage address of the corresponding grouped data of each of the plurality of grouping identifiers; and

processing (730) the corresponding grouped data of each of the plurality of grouping identifiers.

8. The method according to claim 7, wherein the reading (720) the corresponding grouped data of each of the plurality of grouping identifiers from the target quantity of memories based on the first distributed storage mode and the storage address of the corresponding grouped data of each of the plurality of grouping identifiers comprises:

for the target grouping identifier in the plurality of grouping identifiers, determining (7201) a first target memory that needs to participate in data reading from the target quantity of memories based on the first distributed storage mode;

generating (7203) a corresponding read instruction for each of the target quantity of memories based on the storage address of the grouped data corresponding to the target grouping identifier;

sending (7205) the read instruction corresponding to the first target memory, and receiving the grouped data corresponding to the target grouping identifier that is returned by the first target memory in response to the received read instruction;

filtering (7207) other read instructions except the read instruction corresponding to the first target memory.

9. The method according to any one of claims 1 to 6, wherein after the determining (240) a storage address for corresponding grouped data of each of the plurality of grouping identifiers based on the data address constraint information, the method further comprises:

generating (910) a plurality of read instructions based on the storage address of the corresponding grouped data of each of the plurality of grouping identifiers;

sending (920) a plurality of read instructions to the memory;

receiving (930) a plurality pieces of the grouped data that are returned by the memory in response to the plurality of received read instructions;

adjusting (940) an arrangement sequence of the plurality pieces of received grouped data based on a sending sequence of the plurality of read instructions; and

processing (950) the plurality pieces of grouped data with the adjusted arrangement sequence.

10. The method according to any one of claims 1 to 6, wherein after the determining (240) a storage address for corresponding grouped data of each of the plurality of grouping identifiers based on the data address constraint information, the method comprises:

determining (1010) the corresponding grouped data of each of the plurality of grouping identifiers based on to-be-stored tensor data with the data size;

determining (1020), based on the data access configuration information, a target quantity of memories and a second distributed storage mode of a single piece of the grouped data in the target quantity of memories; and

writing (1030) the corresponding grouped data of each of the plurality of grouping identifiers into the target quantity of memories based on the second distributed storage mode and the storage address of the corresponding grouped data of each of the plurality of grouping identifiers.

11. The method according to claim 10, wherein the writing (1030) the corresponding grouped data of each of the plurality of grouping identifiers into the target quantity of memories based on the second distributed storage mode and the storage address of the corresponding grouped data of each of the plurality of grouping identifiers comprises:

for the grouped data corresponding to the target grouping identifier in the plurality of grouping identifiers, determining (10301) a second target memory that needs to participate in data writing from the target quantity of memories based on the second distributed storage mode;
generating (10303) a corresponding write instruction for each of the target quantity of memories based on the storage address of the grouped data corresponding to the target grouping identifier;
sending (10305) the write instruction corresponding to the second target memory, so that the second target memory performs data writing in response to the received write instruction; and
filtering (10307) other write instructions except the write instruction corresponding to the second target memory.

12. A data access apparatus, **characterized in that** the data apparatus comprises:

an obtaining module (1310), configured to obtain data access configuration information;
a first determining module (1320), configured to determine a data size, data address constraint information, and a data grouping storage mode based on the data access configuration information obtained by the obtaining module;
a second determining module (1330), configured to determine a plurality of grouping identifiers based on the data size and the data grouping storage mode that are determined by the first determining module; and
a third determining module (1340), configured to determine a storage address for corresponding grouped data of each of the plurality of grouping identifiers determined by the second determining module based on the data address constraint information determined by the first determining module.

13. The data access apparatus according to claim 12, wherein the third determining module (1340) comprises:

a first determining submodule (1410), configured to determine a corresponding index value for each of a plurality of data dimensions for a target grouping identifier in the plurality of the grouping identifiers determined by the second determining module (1330),
a second determining submodule (1420), configured to determine a first reference address based on the data address constraint information determined by the first determining module (1320) and the corresponding index value of each of the plurality of data dimensions that is determined by the first determining submodule (1410); and
a third determining submodule (1430), configured to determine the storage address of the grouped data corresponding to the target grouping identifier based on the data address constraint information determined by the first determining module (1320) and the first reference address determined by the second determining submodule (1420).

14. A computer readable storage medium, wherein the storage medium stores a computer program, and the computer program is used for implementing the data access method according to any one of claims 1 to 11.

15. An electronic device (1800), **characterized in that** the electronic device comprises:

a processor (1810); and
a memory (1820), configured to store processor-executable instructions, wherein
the processor (1810) is configured to read the executable instructions from the memory (1820), and execute the instructions to implement the data access method according to any one of claims 1 to 11.

FIG. 1

| | |
|---|---|
| Obtain data access configuration information | ~210 |

| | |
|---|---|
| Determine a data size, data address constraint information, and a data grouping storage mode based on the data access configuration information | ~220 |

| | |
|---|---|
| Determine a plurality of grouping identifiers based on the data size and the data grouping storage mode | ~230 |

| | |
|---|---|
| Determine a storage address for corresponding grouped data of each of the plurality of grouping identifiers based on the data address constraint information | ~240 |

FIG. 2

FIG. 3

| For a target grouping identifier in a plurality of the grouping identifiers, determine a corresponding index value for each of a plurality of data dimensions | —410 |

↓

| Determine a first reference address based on data address constraint information and the corresponding index value of each of the plurality of data dimensions | —420 |

↓

| Determine a storage address of grouped data corresponding to the target grouping identifier based on the data address constraint information and the first reference address | —430 |

FIG. 4

Determine a corresponding stride for each of a plurality of data dimensions based on data address constraint information —4201

Determine a first reference address based on a corresponding index value and the corresponding stride of each of the plurality of data dimensions —4203

FIG. 5

Determine an initial address, an address offset, and an address range based on data address constraint information —4301

Overlay the initial address, the address offset, and the first reference address to obtain a second reference address —4303

Determine distribution information of the second reference address relative to the address range —4305

Determine a storage address of grouped data corresponding to a target grouping identifier based on the distribution information —4307

FIG. 6

Determine, based on data access configuration information, a target quantity of memories and a first distributed storage mode of a single piece of grouped data in the target quantity of memories —710

Read corresponding grouped data of each of a plurality of grouping identifiers from the target quantity of memories based on the first distributed storage mode and a storage address of the corresponding grouped data of each of the plurality of grouping identifiers —720

Process the corresponding grouped data of each of the plurality of grouping identifiers —730

FIG. 7

For a target grouping identifier in a plurality of grouping identifiers, determine a first target memory that needs to participate in data reading from a target quantity of memories based on a first distributed storage mode /—7201

Generate a corresponding read instruction for each of the target quantity of memories based on a storage address of grouped data corresponding to the target grouping identifier /— 7203

Send a read instruction corresponding to the first target memory, and receive the grouped data corresponding to the target grouping identifier that is returned by the first target memory in response to the received read instruction /—7205

Filter other read instructions except the read instruction corresponding to the first target memory /—7207

FIG. 8

Generate a plurality of read instructions based on a storage address of corresponding grouped data of each of a plurality of grouping identifiers /—910

Send a plurality of read instructions to a memory /—920

Receive a plurality pieces of the grouped data that are returned by the memory in response to the plurality of received read instructions /—930

Adjust an arrangement sequence of the plurality pieces of received grouped data based on a sending sequence of the plurality of read instructions /—940

Process the plurality pieces of grouped data with the adjusted arrangement sequence /—950

FIG. 9

Determine corresponding grouped data for each of a plurality of grouping identifiers based on to-be-stored tensor data with a data size ⟋—1010

Determine, based on data access configuration information, a target quantity of memories and a second distributed storage mode of a single piece of the grouped data in the target quantity of memories ⟋—1020

Write the corresponding grouped data of each of the plurality of grouping identifiers into the target quantity of memories based on the second distributed storage mode and a storage address of the corresponding grouped data of each of the plurality of grouping identifiers ⟋—1030

FIG. 10

For grouped data corresponding to a target grouping identifier in a plurality of grouping identifiers, determine a second target memory that needs to participate in data writing from a target quantity of memories based on a second distributed storage mode ⟋—10301

Generate a corresponding write instruction for each of the target quantity of memories based on a storage address of the grouped data corresponding to the target grouping identifier ⟋—10303

Send the write instruction corresponding to the second target memory, so that the second target memory performs data writing in response to the received write instruction ⟋—10305

Filter other write instructions except the write instruction corresponding to the second target memory ⟋—10307

FIG. 11

```
┌─────────────────────────┐
│ Parameter configuration │
└─────────────────────────┘
             │
┌─────────────────────────┐
│    Address mapping      │
└─────────────────────────┘
             │
┌─────────────────────────┐
│     Fake operation      │
└─────────────────────────┘
             │
┌─────────────────────────┐
│     Data processing     │
└─────────────────────────┘
```

FIG. 12

```
        ⌐1310              ⌐1320              ⌐1330              ⌐1340
┌──────────────┐  ┌──────────────┐  ┌──────────────┐  ┌──────────────┐
│  Obtaining   │  │    First     │  │    Second    │  │    Third     │
│   module     │  │ determining  │  │ determining  │  │ determining  │
│              │  │   module     │  │   module     │  │   module     │
└──────────────┘  └──────────────┘  └──────────────┘  └──────────────┘
```

FIG. 13

```
        ⌐1410              ⌐1420              ⌐1430
┌──────────────┐  ┌──────────────┐  ┌──────────────┐
│    First     │  │    Second    │  │    Third     │
│ determining  │  │ determining  │  │ determining  │
│  submodule   │  │  submodule   │  │  submodule   │
└──────────────┘  └──────────────┘  └──────────────┘
```

FIG. 14

```
        ⌐1510              ⌐1520              ⌐1530
┌──────────────┐  ┌──────────────┐  ┌──────────────────┐
│    Fourth    │  │              │  │ First processing │
│ determining  │  │Reading module│  │     module       │
│   module     │  │              │  │                  │
└──────────────┘  └──────────────┘  └──────────────────┘
```

FIG. 15

FIG. 16

FIG. 17

FIG. 18

Europäisches
Patentamt

European
Patent Office

Office européen
des brevets

# EUROPEAN SEARCH REPORT

**Application Number**

EP 25 16 8212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ajcr: "An Illustrated Guide to Shape and Strides (Part 1) - ajcr - Haphazard investigations", ,<br>28 February 2024 (2024-02-28), XP093273255,<br>Retrieved from the Internet: URL:https://web.archive.org/web/2024022818 3341/https://ajcr.net/stride-guide-part-1/ [retrieved on 2025-04-28]<br>* the whole document * | 1-15 | INV.<br>G06F3/06<br>G06F12/02 |
| A | US 2022/138551 A1 (MARANI DAVIDE [GB] ET AL) 5 May 2022 (2022-05-05)<br>* paragraph [0024] * | 6 | |

**TECHNICAL FIELDS SEARCHED (IPC)**

G06F

The present search report has been drawn up for all claims

| Place of search | Date of completion of the search | Examiner |
|---|---|---|
| The Hague | 28 April 2025 | Ghiette, Vincent |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 16 8212

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2025

| Patent document cited in search report | Publication date | Patent family member(s) | Publication date |
|---|---|---|---|
| US 2022138551 A1 | 05-05-2022 | GB 2602708 A | 13-07-2022 |
| | | US 2022138551 A1 | 05-05-2022 |

EPO FORM P0459

For more details about this annex : see Official Journal of the European Patent Office, No. 12/82